Europäisches Patentamt

European Patent Office

Office européen des brevets

(11) Veröffentlichungsnummer : **0 160 198**
**B1**

(12) **EUROPÄISCHE PATENTSCHRIFT**

(45) Veröffentlichungstag der Patentschrift :
09.09.87

(51) Int. Cl.⁴ : **G 02 B   7/18, G 02 B   5/08**

(21) Anmeldenummer : **85103096.5**

(22) Anmeldetag : **18.03.85**

(54) **Elektrisch beheizbares Reflexionselement.**

(30) Priorität : 31.03.84 DE 3412055

(43) Veröffentlichungstag der Anmeldung :
06.11.85 Patentblatt 85/45

(45) Bekanntmachung des Hinweises auf die Patenterteilung : 09.09.87 Patentblatt 87/37

(84) Benannte Vertragsstaaten :
BE CH DE FR GB IT LI NL SE

(56) Entgegenhaltungen :
DE-A- 2 710 588

(73) Patentinhaber : BAYER AG
Konzernverwaltung RP Patentabteilung
D-5090 Leverkusen 1 Bayerwerk (DE)

(72) Erfinder : Wank, Joachim, Dipl.-Ing.
Zülpicher Strasse 7
D-4047 Dormagen 5 (DE)
Erfinder : Waldenrath, Werner, Dipl.-Ing.
Maastrichter Strasse 40
D-5000 Köln 1 (DE)
Erfinder : Weber, Hans-Leo, Dipl.-Ing.
Dahlienweg 7
D-4049 Rommerskirchen 2 (DE)

## Beschreibung

Die Erfindung betrifft ein elektrisch beheizbares Reflexionselement für sichtbare und unsichtbare Strahlung.

Bei bestimmten Wetterlagen schlägt sich Tau auf den Reflexionselementen nieder, die dann ihre zugedachte Funktion — die Spiegelung der Strahlen — nicht mehr voll erfüllen können. Beschlagen Autospiegel, so wird die Sicherheit reduziert, Beschlagen Parabolspiegel für den Empfang von Rundfunkstrahlen, so wird die Leistung dieser Anlagen verringert.

Bekannt sind elektrisch beheizbare Spiegel, bei denen durch Aufkleben bzw. Kaschieren von Flächenheizleitern auf der Rückseite der Spiegel ein Heizsystem angebracht wird, welches durch Wärme das niedergeschlagene Wasser verdunstet. Dabei werden als Heizsysteme unter anderem mäanderförmig gebogene Widerstanddrähte zwischen zwei Isolierfolien oder eine mit Leitschicht versehene Folie verwendet.

Der Nachteil dieser Heizsysteme liegt darin, daß die Herstellung solcher Spiegel kostenaufwendig ist, da die Heizleiter manuell angebracht werden müssen. Auch die Verdampfung der Feuchtigkeit dauert infolge des Wärmedurchgang durch die davor angebrachten Schichten verhältnismäßig lange, so daß ein gewünschter schneller Einsatz der Reflexionselemente nicht möglich ist.

Der Erfindung liegt die Aufgabe zugrunde, ein elektrisch beheizbares Reflexionselement zu finden, welche kostengünstig herzustellen ist, gleichmäßig über die gesamte Fläche wirkt, die Heiz-Energie günstig nutzt und in kurzer Zeit wirkt.

Die Aufgabe wurde erfindungsgemäß dadurch gelöst, daß das Reflexionselement aus einem Verbund besteht, der, in dieser Reihenfolge eine Kunststoff-Verstärkung, eine in der Masse elektrisch leitfähige Kunststoff-Folie und eine Reflexionsschicht umfaßt.

Dieses Reflexionselement ist einfach herzustellen. Durch die flächige Kunststoff-Folie, die elektrisch leitfähig ist und einem Oberflächenwiderstand zwischen 30-60 000 Ω besitzt, erfolgt eine gleichmäßige, schnelle, unmittelbare Aufheizung der metallischen Reflexionsschicht, die entsprechend den Erfordernissen mit einem hohen Reflexionsgrad für sichtbares Licht (> 80 %) bei einem Spiegel oder für unsichtbare Strahlen bei Parabol- Antennen ausgebildet ist. Störungen durch Feuchtigkeit werden also schnellstens beseitigt.

In einer besonderen Ausführungsform ist zwischen Folie und metallischer Reflexionsschicht eine elektrisch isolierende Schicht angeordnet.

In manchen Fällen ist es zweckmäßig, die heizbare Folie von der Reflexionsschicht durch eine isolierende Schicht elektrisch zu trennen, um jeder Schicht nur die gewünschte Funktion zuordnen zu können. Auch wird hierdurch die Gefahr von Korrosion verringert.

In einer anderen Ausführungsform besteht die Kunststoff-Verstärkung aus angespritztem Kunststoff.

Für Einbauteile hat sich das Anspritzen von thermoplastischem Kunststoff besonders bewährt, da in einem Arbeitsgang neben der gewünschten Form (Parabolspiegel) auch die notwendige Festigkeit erzeugt werden kann. Gleichzeitig können entsprechende Verankerungen für das Verbinden mit anderen Konstruktionen sowie Aufnahmen für die elektrischen Kontaktstellen der Folie ausgebildet werden.

In einer weiteren Ausführungsform besteht die Kunststoff-Verstärkung aus einer ko-extrudierten Folie.

Dieses Reflexionselement ist vielseitig einsetzbar. Einerseits paßt es sich gut vorgegebene Formen an, andererseits läßt es sich auch über ein bewegliches Gerüst spannen, das nur im Bedarfsfalle ausgefahren wird.

In einer bevorzugten Ausführungsform ist die metallische Reflexionsschicht aufgedampft.

Durch Aufdampfen von Metallen, wie Aluminium, Silber usw. kann eine hochgradig reflektierende Spiegelschicht erreicht werden, die trotz dünner Schichtdicke eine hohe Gleichmäßigkeit und Reflexion aufweist.

In einer Ausführungsform ist die Reflexionsschicht mit einer Schutzschicht versehen.

Die im allgemeinen dünne Schutzschicht, die zum Beispiel aus Lack bestehen kann, schützt die Reflexionsschicht gegen Wettereinflüsse und mechanische Beanspruchungen.

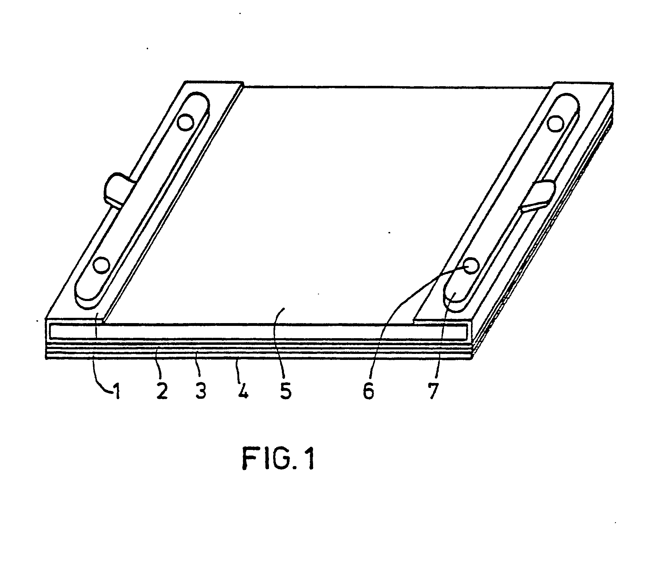

Ein Beispiel der Erfindung ist in der Zeichnung (Fig. 1) dargestellt und wird wie folgt beschrieben.

Eine leitfähige Kunststoff-Folie 1, die auf der Vorderseite mit einer elektrisch isolierenden Schicht 2, einer Reflexionsschicht 3 aus Aluminium als Spiegelschicht und einer Schutzschicht 4 versehen ist, besitzt an der Hinterseite eine ebene Verstärkung 5 aus angespritztem thermoplastischem Kunststoff mit vier Verankerungen 6, durch die die umgeschlagenen Randbereiche der Folie fixiert sind und die zur Aufnahme der metallenen Anschlußbleche 7 dient.

Beispiel 1

Zur Herstellung eines Autospiegels wird eine rußgefüllte Polycarbonatfolie, deren Dicke 30 μm und deren Oberflächenwiderstand 300 Ω beträgt, in eine Spritzgießform eingelegt und mit Polycarbonat, dessen relative Viskosität $\eta_{rel} = 1,28$ beträgt (gemessen nach Ubbelohde, 0,5 % in $CH_2Cl_2$), so hinterspritzt, daß die Folie an den Schmalseiten jeweils 1 cm übersteht. Die Rückseite der angespritzten Kunststoffkappe hat an den Schmalseiten, im Abstand von 5 mm von der Kante zwei senkrecht zur Oberfläche stehende Stifte mit 3 mm ⌀. Die überstehenden Folienränder werden nach hinten gebogen und mit einem, im Abstand der Stifte gelochten Anschlußblech über die hervorstehenden Stifte gedrückt. Das Anschlußblech mit der darunter liegenden leitfähigen Folie wird durch Ultraschallnieten der Stifte auf die Rückseite des Spiegels fixiert.

Die Vorderseite des Spiegels wird — nachdem gegebenenfalls vorher ein Haftgrund aufgetragen wurde — in an sich bekannter Weise mit Aluminium bedampft und zum Schutz mit hochtransparentem Lack versehen.

Ein so hergestellter betauter Spiegel ist nach Einschalten des Stromes innerhalb von 1,5 sec beschlagfrei. Die bisher verwendeten Spiegel, deren Heizung sich auf der Rückseite befindet, sind bei vergleichbarer Heizleistung erst nach 2 min beschlagfrei.

Beispiel 2

Ein Folienverbund, bestehend aus einer elektrisch isolierenden Folie z. B. einer Polycarbonatfolie, einer mit dieser flächig verbundenen elektrisch leitfähigen Folie, einer weiteren isolierenden Schicht, z. B. einer Lackierung, einer aufgedampften Aluminiumschicht von 1-1,5 μm Dicke und einer Schutzlackierung wird durch Vakuumtiefziehen zu einem Rotationsparaboloiden verformt. Dieser Formkörper wird in eine z. B. aus Metall hergestellen Stützrahmen so eingebaut, daß sich keine Abweichungen von der Idealform ergeben, die größer als 1 mm sind. Das Rotationsparaboloid hat einen Durchmesser von 60 cm. Es eignet sich zum Empfang von TV- und Radiowellen mit einer Frequenz um 10 GHz, wie sie z. B. bei der Ausstrahlung von TV- und Rundfunkprogrammen über Satelliten verwendet werden.

Die aufgefagenen Wellen werden an der Al-Schicht reflektiert und auf einem Empfänger konzentriert.

Wenn sich witterungsbedingt eine Betauung, Vereisung oder Bedeckung mit Schnee ergibt sinkt die Empfangsleistung stark ab. Die elektrisch leitfähige Folie wird dann als Heizelement benutzt. Zu diesem Zweck ist sie mit Kaltleitern belegt, die einen Abstand von 10 cm haben und wechselweise an eine Stromquelle angeschlossen sind. Nach Einschalten des Stromes ist der Spiegel innerhalb kurzer Zeit belagfrei.

**Patentansprüche**

1. Elektrisch beheizbares Reflexionselement für sichtbare und unsichtbare Strahlung, dadurch gekennzeichnet, daß das Reflexionselement aus einem Verbund besteht, der, in dieser Reihenfolge, eine Kunststoff-Verstärkung (5), eine in der Masse elektrisch leitfähige Kunststoff-Folie (1) und eine Reflexionsschicht (3) umfaßt.

2. Elektrisch beheizbares Reflexionselement nach Anspruch 1, dadurch gekennzeichnet, daß zwischen Kunststoff-Folie (1) und metallischer Reflexionsschicht (3) eine elektrisch isolierende Schicht (2) angeordnet ist.

3. Elektrisch beheizbares Reflexionselement nach Anspruch 1, dadurch gekennzeichnet, daß die Kunststoff-Verstärkung (5) aus angespritztem Kunststoff besteht.

4. Elektrisch beheizbares Reflexionselement nach Anspruch 1, dadurch gekennzeichnet, daß die Kunststoff-Verstärkung (5) aus einer ko-extrudierten Folie besteht.

5. Elektrisch beheizbares Reflexionselement nach den Ansprüchen 1 bis 4, dadurch gekennzeichnet, daß die metallische Reflexionsschicht (3) aufgedampft ist.

6. Elektrisch beheizbares Reflexionselement nach den Ansprüchen 1 bis 5, dadurch gekennzeichnet, daß die Reflexionsschicht (3) mit einer Schutzschicht (4) versehen ist.

**Claims**

1. Electrically heatable reflection element for visible and invisible radiation, characterised in that the reflection element consists of a composite which comprises in the following order : a plastic reinforcement (5), a plastic film (1) which is in itself electrically conductive and a reflection layer (3).

2. Electrically heatable reflection element according to Claim 1, characterised in that an electrically insulating layer (2) is positioned between the plastic film (1) and the metallic reflection layer (3).

3. Electrically heatable reflection element according to Claim 1, characterised in that the plastic reinforcement (5) consists of injection-moulded plastic.

4. Electrically heatable reflection element according to Claim 1, characterised in that the plastic reinforcement (5) consists of a co-extruded film.

5. Electrically heatable reflection element according to Claims 1 to 4, characterised in that the metallic reflection layer (3) is applied by evaporation.

6. Electrically heatable reflection element according to Claims 1 to 5, characterised in that the reflection layer (3) is provided with a protective layer (4).

**Revendications**

1. Elément réflecteur pouvant être chauffé électriquement, pour rayonnements visibles et invisibles, caractérisé par le fait que cet élément réflecteur consiste en une structure composite renfermant, selon l'ordre suivant, un renfort en matière plastique (5), une feuille de matière plastique (1) électriquement conductrice dans la masse, et une couche de réflexion (3).

2. Elément réflecteur pouvant être chauffé électriquement, selon la revendication 1, caractérisé par le fait qu'une couche (2) électriquement isolante est intercalée entre la feuille de matière plastique (1) et la couche métallique de réflexion (3).

3. Elément réflecteur pouvant être chauffé électriquement, selon la revendication 1, caractérisé par le fait que le renfort en matière plastique (5) consiste en une matière plastique injectée.

4. Elément réflecteur pouvant être chauffé électriquement, selon la revendication 1, caractérisé par le fait que le renfort en matière plastique (5) consiste en une feuille coextrudée.

5. Elément réflecteur pouvant être chauffé électriquement, selon les revendications 1 à 4, caractérisé par le fait que la couche métallique de réflexion (3) est formée par métallisation sous vide.

6. Elément réflecteur pouvant être chauffé électriquement, selon les revendications 1 à 5, caractérisé par le fait que la couche de réflexion (3) est pourvue d'une couche protectrice (4).

FIG. 1